# EUROPEAN PATENT SPECIFICATION

(11) **EP 2 623 896 B1**
(45) Date of publication and mention of the grant of the patent: **14.04.2021**
(21) Application number: 11828257.3
(22) Date of filing: 25.02.2011
(51) Int. Cl.: F25B 47/02, F24F 1/18, F28D 20/00

(54) **AIR CONDITIONER HAVING A HEAT STORAGE DEVICE**
KLIMAANLAGE MIT WÄRMESPEICHERVORRICHTUNG
CLIMATISEUR COMPORTANT UN DISPOSITIF DE STOCKAGE DE CHALEUR

(30) Priority: 30.09.2010 JP 2010221138
(43) Date of publication of application: 07.08.2013
(73) Proprietor: Panasonic Corporation, Osaka 571-8501 (JP)
(72) Inventor: KAWAZOE, Daisuke, Osaka 540-6207 (JP); KURISUTANI, Hiroharu, Osaka 540-6207 (JP); IMASAKA, Toshiyuki, Osaka 540-6207 (JP); SHIMIZU, Akihiko, Osaka 540-6207 (JP); AKAMINE, Ikuo, Osaka 540-6207 (JP)
(74) Representative: Eisenführ Speiser
(86) International application number: PCT/JP2011/001088
(87) International publication number: WO 2012/042687

(56) References cited:
- EP-A2- 0 987 502
- DE-U1-202004 021 113
- DE-U1-202007 014 887
- FR-A- 1 416 502
- JP-A- 2 004 148
- JP-A- 2 251 052
- JP-A- 4 340 057
- JP-A- 6 074 618
- JP-A- H0 510 605
- JP-A- H08 247 627
- JP-A- H11 316 060
- JP-A- 2000 088 297
- JP-A- 2001 330 386

## Description

### TECHNICAL FIELD

The present invention relates to an air conditioner having a heat storage device accommodating a heat storage material that stores heat generated by a compressor.

### BACKGROUND ART

From Patent Literature 2 and 3, heat storage systems are known.

Patent Literature 2 discloses a heat source apparatus producing heat which is stored in a heat storage material in a heat storage tank through a heat storage heat exchanger. The stored heat is supplied to an indoor heat exchanger, wherein a non-azeotropic mixture refrigerant is used as a heat transfer medium in the heat source apparatus to positively or negatively change over a flow direction of a refrigerant in the heat storage heat exchanger.

From Patent Literature 3 an air conditioning system with a storage tank is known in which a pipe-shaped heat transfer tube and a plate-shaped fin installed to the heat transfer tube form a heat exchanger.

A conventional heat pump air conditioner performs defrosting by switching from a heating cycle to a cooling cycle with use of a four-way valve when frost has been formed on an outdoor heat exchanger during heating operation. In this defrosting method, although an indoor fan is stopped, cold air gradually flows out of an indoor unit, thus posing a defect of warmth being lost.

In view of the above, there has been proposed another air conditioner that includes a heat storage device mounted on a compressor in an outdoor unit for the purpose of defrosting by utilizing waste heat of the compressor stored in a heat storage tank during heating operation (see, for example, Patent Document 1).

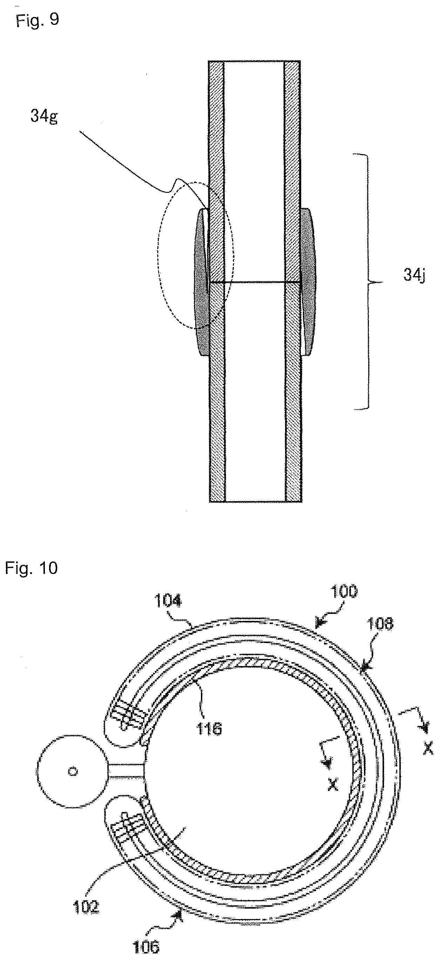

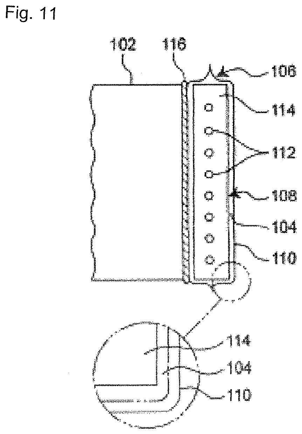

Figs. 10 and 11 are sectional views exemplifying a conventional heat storage device. In Figs. 10 and 11, a heat storage device 100 includes a hermetic heat storage box 106 having a generally hollow cylindrical shape, disposed around a compressor 102, which serves as a heat generator, and filled with a heat storage material 104, a heat exchanger 108 for heat storage and heat radiation accommodated in the hermetic heat storage box 106, and the like.

As shown in the sectional view of Fig. 11 taken along line X-X of Fig. 10, the hermetic heat storage box 106 is formed into the generally hollow cylindrical shape by sealing an upper end of a casing 110 made of, for example, an aluminum thin plate, and the heat storage material 104 is filled in the casing 110. The heat exchanger 108 is formed by securing a fin 114 made of aluminum or the like to a pipe 112 as a passage of a refrigerant, for example.

In the heat storage device 100 configured as described above, while the compressor 102 is in operation, heat generated by the compressor 102 is transferred to the hermetic heat storage box 106 via silicon oil 116 and stored in the heat storage material 104 in the hermetic heat storage box 106.

### PATENT DOCUMENT

Patent Document 1: JP 02-128065 U
Patent Document 2: JP H11-316060 A
Patent Document 3: EP 0 987 502 A2

### SUMMARY OF THE INVENTION

### PROBLEM TO BE SOLVED BY THE INVENTION

In the heat storage device 100 disclosed in Patent Document 1, as shown in Fig. 11, the refrigerant passage pipe 112 is disposed in the heat storage device 100 over a wide range from a position adjacent to an upper end to a position adjacent to a lower end of the heat storage device 100.

Generally, piping configuring a refrigeration cycle, such as the refrigerant passage pipe, is formed by connecting a plurality of pipes by means of brazing, welding, a flare groove joint, or the like. The conventional technique mentioned above does not include any particular consideration of the position of such a joint portion.

The heat exchanger 108 of a fin tube type as in the conventional technique mentioned above is generally produced by inserting a copper pipe of a hair pin shape through a hole in an aluminum fin material, attaching a return bend to each end, and integrally brazing a joint portion between the hair pin copper pipe and the return bend.

In a case where the heat exchanger is immersed in the heat storage material in order to efficiently store or absorb heat, the joint portion immersed in the heat storage material is more likely to corrode rather than the other portions, leading to problematic reliability of the refrigeration cycle.

The present invention has been made in view of such a problem of the conventional technique. It is an object of the present invention to provide a heat storage device that can efficiently store heat in a heat storage material or efficiently obtain stored heat, with reliability secured for a long period of time.

### MEANS FOR SOLVING THE PROBLEM

In order to achieve the object mentioned above, the present invention provides an air conditioner as defined in the appended claims. The air conditioner comprises a heat storage device, disposed to surround a compressor, for storing heat generated by the compressor. The heat storage device includes a heat storage tank accommodating a heat storage material storing heat generated by the compressor, and a heat storage heat exchanger accommodated in the heat storage tank. That is, the heat storage tank, the heat storage heat exchanger and the heat storage material are disposed to surround the compressor. Pipes configuring a refrigeration cycle have a joint portion wherein the joint portion is located outside the heat storage tank. A vertical position of a center of gravity of the heat storage heat exchanger is higher than a vertical center of the heat storage tank. A lower end of the heat storage heat exchanger is lower than a vertical center of the heat storage tank. The lower end of the heat storage heat exchanger is positioned in a vicinity of the vertical center of the heat storage tank.

### EFFECT OF THE INVENTION

In the heat storage device of the air conditioner configured as described above, the joint portion between the pipes, which is more likely to corrode in comparison to the pipes and largely influences maintenance of the function, is not immersed in the heat storage material. Even if the pipes configuring the refrigeration cycle are immersed in the heat storage material and the heat storage material or a material for the pipes along with the heat storage material affects the pipes, it is possible to keep reliability for a long period of time.

### BRIEF DESCRIPTION OF THE DRAWINGS

Fig. 1 is a configuration diagram of an air conditioner according to the present invention including a heat storage device.
Fig. 2 is a pattern diagram of the air conditioner of Fig. 1, depicting operation thereof and a flow of a refrigerant during normal heating.
Fig. 3 is a pattern diagram of the air conditioner of Fig. 1, depicting operation thereof and a flow of the refrigerant during defrosting/heating.
Fig. 4 is a perspective view of the heat storage device of an air conditioner according to the present invention with a compressor and an accumulator being attached thereto.
Fig. 5 is an exploded perspective view of the heat storage device of Fig. 4.
Fig. 6 is a perspective view of the heat storage device of Fig. 4.
Fig. 7 is a sectional view taken along line VII-VII of Fig. 6.
Fig. 8 is a sectional view taken along line VIII-VIII of Fig. 6.
Fig. 9 is a pattern view of a joint portion of a heat storage heat exchanger.
Fig. 10 is a transverse sectional view of a conventional heat storage device.
Fig. 11 is a sectional view taken along line X-X of Fig. 10.

### DESCRIPTION OF EMBODIMENTS

The present invention provides an air conditioner comprising a heat storage device, disposed to surround a compressor, for storing heat generated by the compressor, as defined by the appended claims. Therein, pipes configuring a refrigeration cycle have a joint portion that is disposed so as not to be immersed in the heat storage material.

In this configuration, the joint portion between the pipes, which is more likely to corrode in comparison to the pipes and largely influences maintenance of the function, is not immersed in the heat storage material. Even if a substance contained in the heat storage material affects the joint portion, it is possible to keep reliability for a long period of time.

In the heat storage heat exchanger, the heat storage material includes glycol. Glycol has relatively high specific heat and is less corrosive, and aqueous solution thereof increases the boiling point and decreases the freezing point, which is excellent as the heat storage material.

The joint portion is positioned outside the container filled with the heat storage material. When the joint portion is located outside the container filled with the heat storage material, the joint portion will not be brought into contact with the heat storage material even if the heat storage material moves due to vibration or an outdoor unit is installed obliquely. The joint portion will not corrode accordingly.

An embodiment of the present invention is described below with reference to the drawings. It should be noted that the present invention is not limited to this embodiment.

### (Embodiment 1)

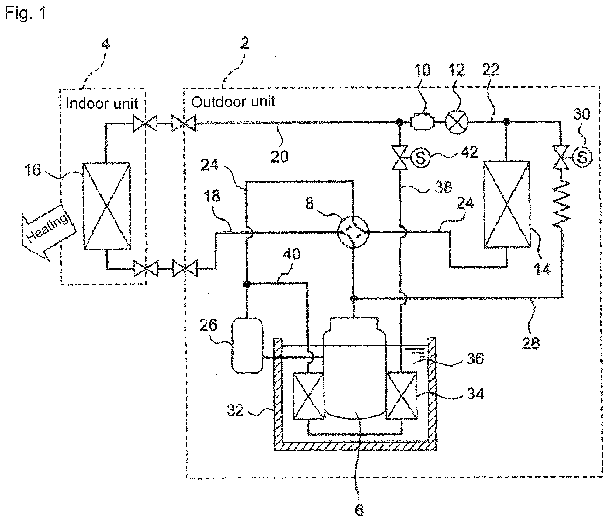

Fig. 1 depicts a configuration of an air conditioner according to the present invention including a heat storage device. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. These components are connected to each other via refrigerant piping so as to configure a refrigeration cycle.

More specifically, the compressor 6 and the indoor heat exchanger 16 are connected to each other via a first pipe 18 on which the four-way valve 8 is provided, and the indoor heat exchanger 16 and the expansion valve 12 are connected to each other via a second pipe 20 on which the strainer 10 is provided. Furthermore, the expansion valve 12 and the outdoor heat exchanger 14 are connected to each other via a third pipe 22, and the outdoor heat exchanger 14 and the compressor 6 are connected to each other via a fourth pipe 24.

The four-way valve 8 is located midway on the fourth pipe 24, and an accumulator 26 for separating a liquid refrigerant and a gaseous refrigerant is provided on the fourth pipe 24 on a refrigerant suction side of the compressor 6. The compressor 6 and the third pipe 22 are connected to each other via a fifth pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 used for exchanging heat with the heat storage heat exchanger 34. The heat storage tank 32, the heat storage heat exchanger 34, and the heat storage material 36 constitute the heat storage device.

Moreover, the second pipe 20 and the heat storage heat exchanger 34 are connected to each other via a sixth pipe 38, and the heat storage heat exchanger 34 and the fourth pipe 24 are connected to each other via a seventh pipe 40. A second solenoid valve 42 is provided on the sixth pipe 38.

The indoor unit 4 accommodates therein, in addition to the indoor heat exchanger 16, a ventilation fan (not shown), vertical wind direction changing blades (not shown), and horizontal wind direction changing blades (not shown). The indoor heat exchanger 16 exchanges heat between indoor air sucked into the indoor unit 4 by the ventilation fan and a refrigerant flowing through the indoor heat exchanger 16 so that air heated or cooled by heat exchange may be blown into a room during heating or cooling, respectively. As an occasion demands, the vertical wind direction changing blades vertically change the direction of air blown out of the indoor unit 4 and the horizontal wind direction changing blades horizontally change the direction of air brown out of the indoor unit 4.

The compressor 6, the ventilation fan, the vertical wind direction changing blades, the horizontal wind direction changing blades, the four-way valve 8, the expansion valve 12, the solenoid valves 30 and 42, and the like are electrically connected to and controlled by a controller (for example, a microcomputer not shown).

The connection relationship between and functions of the components in refrigeration cycle equipment thus configured according to the present invention are described below with reference to a flow of the refrigerant, exemplifying the case of heating operation.

The refrigerant discharged from a discharge port of the compressor 6 passes through the four-way valve 8 and reaches the indoor heat exchanger 16 via the first pipe 18. The refrigerant condenses in the indoor heat exchanger 16 by exchanging heat with indoor air, leaves the indoor heat exchanger 16, and passes through the second pipe 20 as well as through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third pipe 22. The refrigerant then evaporates in the outdoor heat exchanger 14 by exchanging heat with outdoor air and passes through the fourth pipe 24, the four-way valve 8, and the accumulator 26, before the refrigerant returns to a suction port of the compressor 6.

The fifth pipe 28 branched from the first pipe 18 between the discharge port of the compressor 6 and the four-way valve 8 joins the third pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed to surround and contact the compressor 6, so as to store heat generated by the compressor 6 in the heat storage material 36. The sixth pipe 38 branched from the second pipe 20 between the indoor heat exchanger 16 and the strainer 10 reaches an inlet of the heat storage heat exchanger 34 via the second solenoid valve 42, and the seventh pipe 40 extending from an outlet of the heat storage heat exchanger 34 joins the fourth pipe 24 between the four-way valve 8 and the accumulator 26.

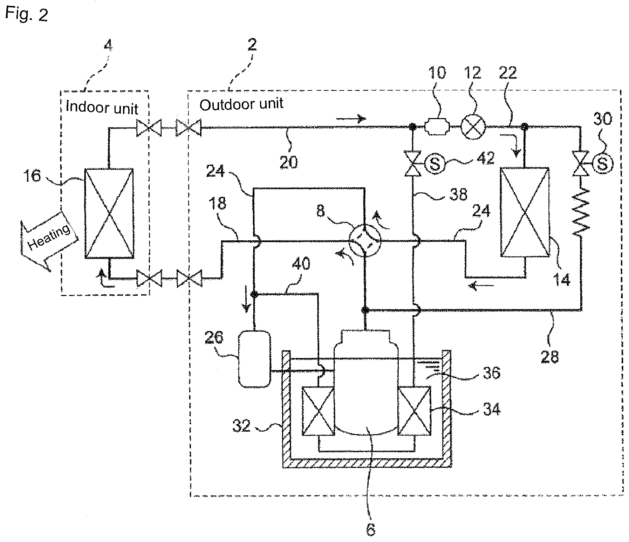

Operation of the air conditioner during normal heating is described next with reference to Fig. 2 that schematically depicts the operation of the air conditioner of Fig. 1 and a flow of the refrigerant during normal heating.

During normal heating operation, the first solenoid valve 30 and the second solenoid valve 42 are controlled to be closed. In this case, as described above, the refrigerant discharged from the discharge port of the compressor 6 passes through the four-way valve 8 and reaches the indoor heat exchanger 16 via the first pipe 18. Having condensed by exchanging heat with indoor air in the indoor heat exchanger 16, the refrigerant leaves the indoor heat exchanger 16, passes through the second pipe 20, and reaches the expansion valve 12. The refrigerant is then reduced in pressure by the expansion valve 12 and reaches the outdoor heat exchanger 14 via the third pipe 22. Having evaporated by exchanging heat with outdoor air in the outdoor heat exchanger 14, the refrigerant passes through the fourth pipe 24 as well as through the four-way valve 8 and returns to the suction port of the compressor 6.

Heat generated by the compressor 6 is transferred from an outer wall of the compressor 6 to an outer wall of the heat storage tank 32 and is stored in the heat storage material 36 that is accommodated in the heat storage tank 32.

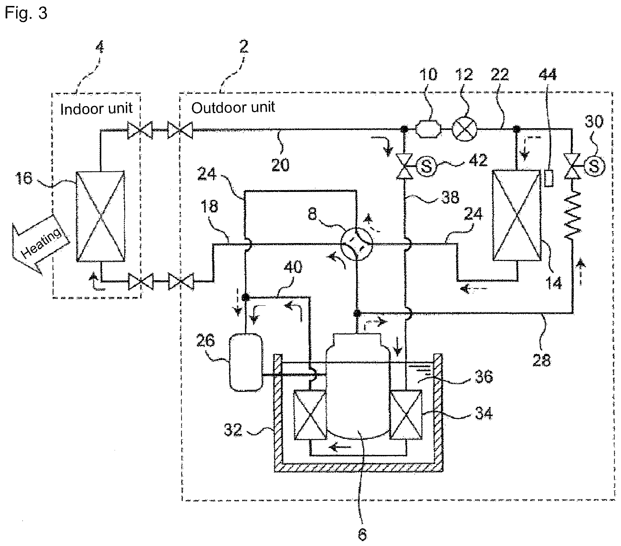

Operation of the air conditioner during defrosting/heating is described next with reference to Fig. 3 that schematically depicts the operation of the air conditioner of Fig. 1 and a flow of the refrigerant during defrosting/heating. In this figure, solid arrows indicate a flow of the refrigerant used for heating, and dotted arrows indicate a flow of the refrigerant used for defrosting.

If frost is formed and grows on the outdoor heat exchanger 14 during normal heating operation described above, airflow resistance of the outdoor heat exchanger 14 increases to thereby reduce the amount of air passing therethrough, resulting in reduction of the evaporating temperature in the outdoor heat exchanger 14. As shown in Fig. 3, the air conditioner according to the present invention is provided with a temperature sensor 44 for detecting piping temperature of the outdoor heat exchanger 14, and if this temperature sensor 44 detects reduction in evaporating temperature as compared with the case where no frost is formed, the controller outputs a command to shift from normal heating operation to defrosting/heating operation.

When the air conditioner is shifted from normal heating operation to defrosting/heating operation, the first solenoid valve 30 and the second solenoid valve 42 are controlled to be opened. In this case, in addition to the flow of the refrigerant during normal heating operation as described above, part of a gaseous refrigerant discharged from the discharge port of the compressor 6 passes through the fifth pipe 28 and the first solenoid valve 30 and joins the refrigerant passing through the third pipe 22 to heat the outdoor heat exchanger 14. Having condensed and turned into a liquid phase, the refrigerant passes through the fourth pipe 24 and returns to the suction port of the compressor 6 via the four-way valve 8 and the accumulator 26.

Furthermore, part of the liquid refrigerant diverged from the second pipe 20 between the indoor heat exchanger 16 and the strainer 10 passes through the sixth pipe 38 and the second solenoid valve 42 and absorbs heat from the heat storage material 36 in the heat storage heat exchanger 34. The liquid refrigerant then evaporates and turns into a gas phase. The resultant gaseous refrigerant passes through the seventh pipe 40, joins the refrigerant passing through the fourth pipe 24, and returns to the suction port of the compressor 6 via the accumulator 26. Alternatively, the joining position may be between the accumulator 26 and the compressor 6. In such a case, it is possible to avoid absorption of heat due to heat capacity of the accumulator 26 itself.

Although the refrigerant returning to the accumulator 26 contains the liquid refrigerant returning from the outdoor heat exchanger 14, the latter is admixed with the hot gaseous refrigerant returning from the heat storage heat exchanger 34 to thereby promote evaporation of the liquid refrigerant. Accordingly, the liquid refrigerant may not pass through the accumulator 26 and return to the compressor 6, thus making it possible to enhance the reliability of the compressor 6.

At the start of defrosting/heating operation, the temperature of the outdoor heat exchanger 14 is below the freezing point due to adhesion of frost, but when the outdoor heat exchanger 14 is heated by the gaseous refrigerant discharged from the discharge port of the compressor 6, frost melts at around zero degree and the temperature of the outdoor heat exchanger 14 starts to increase again upon termination of melting of the frost. When the temperature sensor 44 detects such temperature rise of the outdoor heat exchanger 14, it is determined that defrosting has been completed and the controller outputs a command to shift from defrosting/heating operation to normal heating operation.

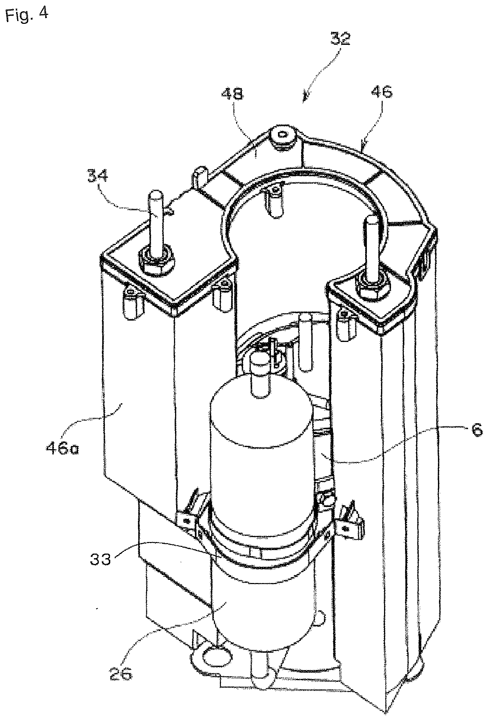

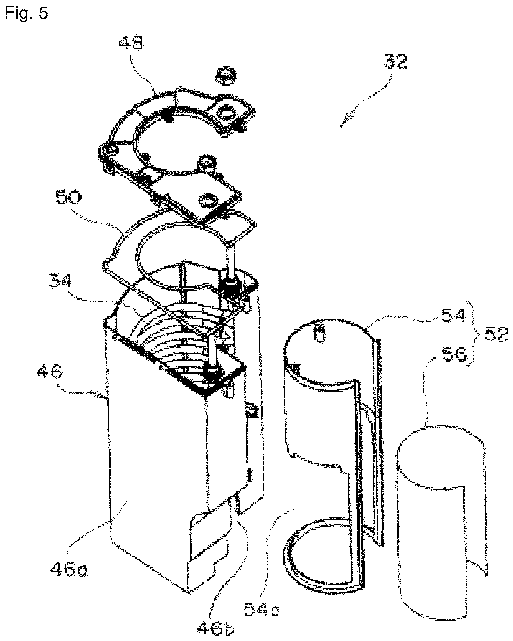

Figs. 4 and 5 each depict the heat storage device. As described earlier, the heat storage device includes the heat storage tank 32, the heat storage heat exchanger 34, and the heat storage material 36. Fig. 4 depicts a state where the compressor 6 and the accumulator 26 attached to the compressor 6 are installed in the heat storage device. Fig. 5 is an exploded perspective view of the heat storage device.

As shown in Fig. 5, the heat storage tank 32 includes a heat storage tank body 46 made of resin and having an upper opening, as well as a side wall 46a and a bottom wall (not shown), a lid 48 made of resin and closing the upper opening of the heat storage tank body 46, and a packing member 50 made of, for example, silicon rubber and interposed between the heat storage tank body 46 and the lid 48. The lid 48 is screwed to the heat storage tank body 46. The side wall 46a of the heat storage tank body 46 is partially opened (specifically, the portion of the side wall 46a facing the compressor 6), and a contact member 52 is joined to a peripheral edge of this opening 46b so as to be brought into close contact with the outer peripheral surface of the compressor 6.

The contact member 52 includes a frame 54 and a sheet member 56, and has a generally cylindrical shape of a predetermined diameter and is partially cut off. The compressor 6 is accommodated in the contact member 52, so that the inner diameter of the contact member 52 is set to be slightly larger than the outer diameter of the compressor 6 in consideration of mounting tolerance and the like.

The frame 54 has an opening 54a from an intermediate portion to a lower portion thereof in the vertical direction. The sheet member 56 is joined to the frame 54 so as to close the opening 54a.

The heat storage tank 32 is closely fixed to the compressor 6 by means of a band 33.

Fig. 5 exemplifies the case where the opening 46b is provided in the side wall 46a. However, the present invention is not limited to this configuration. Alternatively, the opening 46b may not be provided. In this case, in order to improve the adhesion property between a heat transfer portion of the heat storage tank 32 and the compressor 6, there may be interposed, between the heat storage tank 32 and the compressor 6, a resin (such as silicon) sheet member, which is elastic and excellent in heat transfer property.

The heat storage heat exchanger 34 is configured by, for example, a copper pipe bent into a serpiginous shape and is accommodated in the heat storage tank body 46. The heat storage heat exchanger 34 has opposite ends extending upward from the lid 48. One of the ends is connected to the sixth pipe 38 (see Fig. 1), while the other one of the ends is connected to the seventh pipe 40 (see Fig. 1). The heat storage tank body 46, which is surrounded with the side wall 46a, the bottom wall, and the contact member 52, has an internal space accommodating the heat storage heat exchanger 34 and filled with the heat storage material 36.

The heat storage device is provided with agitating means for agitating the heat storage material 36 filled therein. If not, temperature distribution of the heat storage material 36 is not uniform. Therefore, in the present invention, in view of efficient heat exchange, the heat storage heat exchanger 34 bent into the serpiginous shape is preferably disposed at an upper portion of the heat storage tank 32.

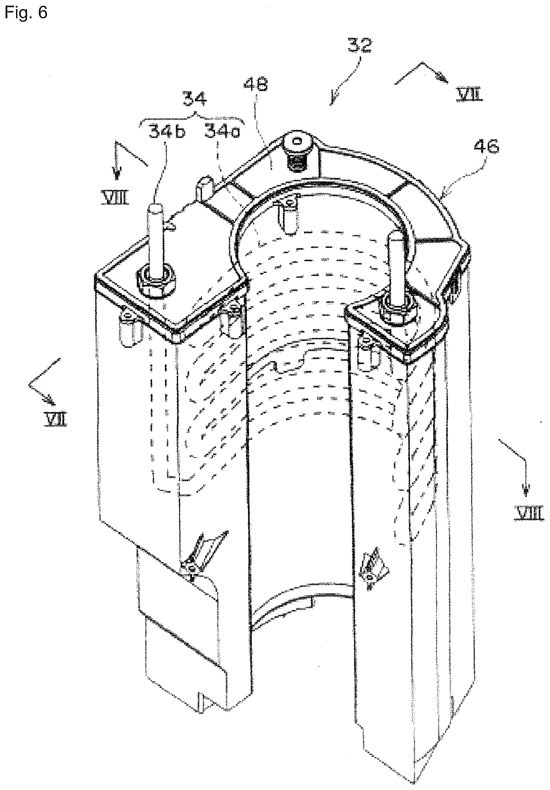

In the latter case, the amount of heat exchanged between the refrigerant passing through the heat storage heat exchanger 34 and the heat storage material 36 for exchanging heat with the refrigerant increases along with increase in temperature difference, followed by reduction in time period for defrosting. The high-temperature heat storage material 36 gathers in an upper portion in the heat storage tank 32 and the low-temperature heat storage material 36 gathers in a lower portion in the heat storage tank 32. As shown in Figs. 6 to 8, the heat storage heat exchanger 34 has a bent portion 34a and straight portions 34b extending linearly upward from opposite ends of the bent portion 34a, and the bent portion 34a is entirely disposed so as to snake along an inner wall surface of the heat storage tank body 46 within a predetermined range of the upper portion of the heat storage tank 32.

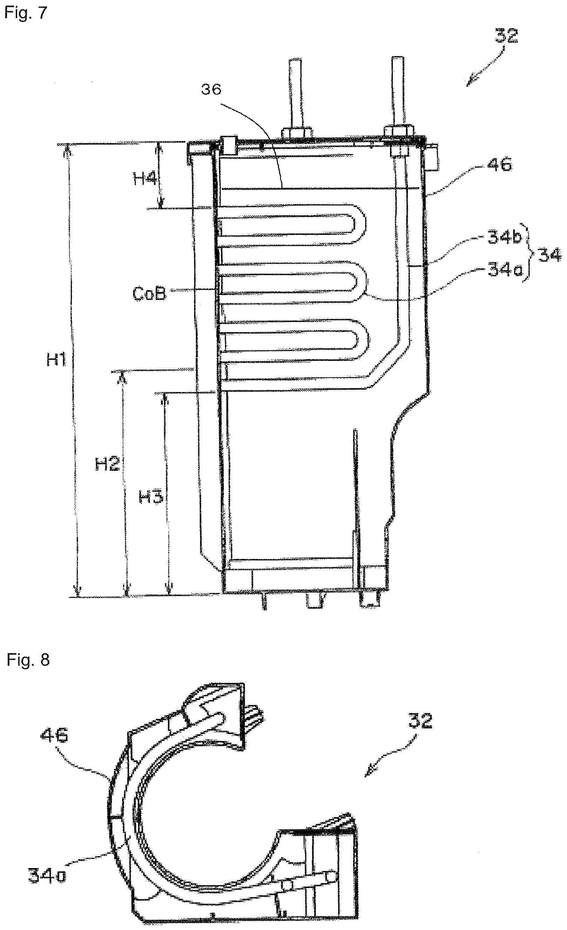

More detail is described with reference to Fig. 7. The height of the heat storage tank 32 from a bottom surface thereof is indicated by H1, the height of a center of the heat storage tank 32 from the bottom surface thereof is indicated by H2 (H2 = H1/2), the height of a lower end of the bent portion 34a of the heat storage heat exchanger 34 from the bottom surface of the heat storage tank 32 is indicated by H3, and the distance from an upper surface of the heat storage tank 32 to an upper end of the bent portion 34a of the heat storage heat exchanger 34 is indicated by H4. In the present invention, H3 and H4 are set to a predetermined height and a predetermined distance, respectively.

A vertical position CoB of the center of gravity of the heat storage heat exchanger 34 is set to be higher than the vertical position H2 of the center of the heat storage tank 32. It is to be noted that the vertical position CoB of the center of gravity of the heat storage heat exchanger 34 corresponds to a position of the center of gravity of a combination of the bent portion 34a and the straight portions 34b of the heat storage heat exchanger 34. In the heat storage device, heat generated by the compressor 6 is stored in the heat storage material 36, in which the temperature of the heat storage material 36 located at an upper portion of the heat storage tank 32 is higher than that of the heat storage material 36 located at a lower portion of the heat storage tank 32. In the heat storage device of the air conditioner according to the present invention, because the center of gravity of the heat storage heat exchanger 34 is set to be higher than the vertical position of the center of the heat storage tank 32, the heat storage heat exchanger 34 exchanges heat mainly with the relatively high-temperature portion of the heat storage material 36. In other words, the heat storage heat exchanger 34 of the air conditioner according to the present invention can efficiently exchange heat with the heat storage material 36.

Furthermore, according to the invention, the height H3 of the lower end of the heat storage heat exchanger 34 is lower than the height H2 of the center of the heat storage tank 32 and is positioned in the vicinity of the height H2 of the center. As a result, the entire heat storage heat exchanger 34 is made in contact with the higher-temperature heat storage material 36. The heat storage heat exchanger 34 can thus exchange heat more efficiently with the heat storage material 36.

On the other hand, the distance H4 from the upper surface of the heat storage tank 32 to the upper end of the bent portion 34a of the heat storage heat exchanger 34 is determined in consideration of inclination of the heat storage tank 32. More specifically, the compressor 6 and the heat storage tank 32 are generally accommodated in the outdoor unit 2, which is sometimes installed outside at an angle. In consideration of such inclination, the heat storage heat exchanger 34 is installed in the heat storage tank 32 such that the upper end of the bent portion 34a of the heat storage heat exchanger 34 is positioned below the upper surface of the heat storage tank 32 by the predetermined distance H4. In this configuration, when the heat storage material 36 is filled in the heat storage tank 32 to the extent that the lid 48 does not touch the liquid level of the heat storage material 36, even if the heat storage tank 32 is inclined at a predetermined angle (for example, about 7 degrees with respect to an installation surface), the bent portion 34a of the heat storage heat exchanger 34 is always immersed in the heat storage material 36. The heat storage material 36 occupies about 80% of the maximum capacity of the heat storage tank 32 at ordinary temperature.

Assume a case where ethylene glycol aqueous solution is used as the heat storage material 36. Ethylene glycol left in a hot environment for a long period of time reacts with dissolved oxygen in the aqueous solution to generate glycolic acid, which further reacts with dissolved oxygen to generate oxalic acid, from which formic acid is generated. In this manner, there are generated organic acids of various types.

In order to prevent generation of any of these organic acids or influence of such generated organic acids, an additive such as a pH adjuster or an antioxidant may be added to the heat storage material 36. However, the additive such as the pH adjuster or the antioxidant is limited in added amount to the heat storage material 36. The effect thereof deteriorates gradually with time, and generated organic acids gradually increase in amount. As a result, the organic acids thus generated gradually decrease pH of the heat storage material 36.

The pH is decreased more significantly as the organic acids generated in the heat storage material 36 increase in amount, and the degree of corrosion with respect to metal increases along with such decrease in pH.

As shown in Fig. 9, pipes are connected with each other at a joint portion 34j generally by means of brazing, welding, or a flare groove joint. In any case, there is formed a slight gap 34g at the joint portion 34j.

When invading the slight gap 34g, a corrosive organic acid is likely to stay because the organic acid tends not to disperse entirely in the heat storage material 36.

In particular, glycolic acid has strong affinity with copper, which is a metal material for a pipe member, and forms coordinate bond to copper, so that glycolic acid having invaded in the slight gap 34g is less likely to flow outside. As a result, glycolic acid tends to gradually increase in concentration as compared to the heat storage material 36 outside the slight gap 34g.

Even in the case where an additive such as the pH adjuster or the antioxidant is added to the heat storage material 36, the additive such as the pH adjuster or the antioxidant is less likely to additionally flow into the slight gap 34g. The additive will not be sufficiently effective in the slight gap 34g. The acid concentration increases locally in the slight gap 34g, so that pH of the heat storage material 36 decreases locally. The joint portion 34j is thus more likely to be corroded in comparison to the copper pipe portion having no joint portion (in other words, seamless) as in the present embodiment.

Even when dissolved oxygen is eliminated by reacting with glycol in the slight gap 34g, new dissolved oxygen hardly flows in. The concentration of dissolved oxygen in the heat storage material 36 in the slight gap 34g is different from that outside the slight gap 34g, thereby forming an oxygen concentration cell. As a result, the joint portion 34j is likely to corrode.

Particularly in the case where the pipes are connected to each other by brazing or welding, at the joint portion 34j of the pipes of the heat storage heat exchanger 34, metal of the pipes of the heat storage heat exchanger 34 is increased in grain size by being heated at high temperature during brazing or welding, so that the metallographic structure is uneven in and around the heated portion. The heat storage heat exchanger 34 is immersed in the heat storage material 36 that is an electrolyte including generated organic acids, and thus a local cell is more likely to be formed. Such a portion is more likely to corrode in comparison to the portions not heated during brazing or welding.

The heat storage material 36 may corrode, due to the influence of generated organic acids, to some extent, a member (copper, for example) configuring the refrigeration cycle such as the pipe or the heat exchanger. If the joint portion 34j and the heat storage material 36 are configured to be in contact with each other, the joint portion is in particular more likely to corrode due to corrosion in the gap in comparison to a pipe body 34p, thereby defectively deteriorating in reliability. The heat storage heat exchanger tends to be broken by internal pressure of the refrigerant.

According to the present embodiment, in order to improve reliability, the heat storage heat exchanger 34 includes the portion immersed in the heat storage material 36, which is not brazed but is formed by bending a seamless copper pipe. The brazed portion is located at a position never in contact with the heat storage material 36. More specifically, the brazed portion is preferably located outside the heat storage tank 32 that serves as a container filled with the heat storage material 36. If there is a portion in the heat storage tank 32 not immersed in the heat storage material 36 by adjustment of the amount of the heat storage material 36 filled in the heat storage tank 32, the joint portion such as the brazed portion may be located in such a portion in the heat storage tank 32.

In this case, due to vibration of the heat storage tank caused while the air conditioner is in operation, the liquid level of the heat storage material 36 may shift vertically or the heat storage material 36 may splash to be brought into contact with the brazed portion. The joint portion is desirably coated with epoxy resin or the like, or provided with a cover so as to prevent such contact between the joint portion and the heat storage material 36.

Although, in the present embodiment, the heat storage device is detachably mounted on the compressor 6, an outer shell of the compressor 6 and the heat storage tank body 46 may be each made of metal and these may be firmly fixed to each other by, for example, welding.

In the heat storage device of the air conditioner according to the present embodiment, as described earlier, heat generated by the compressor 6 is transferred from the outer wall of the compressor 6 to the outer wall of the heat storage tank 32 and is stored in the heat storage material 36 that is accommodated in the heat storage tank 32.

In a case where the compressor 6 is used as a heat source, waste heat of the compressor 6 is stored in the heat storage material 36. It is thus possible to store heat with less energy, as compared with a case where an additional heater or the like is used as the heat source.

The compressor 6 has an operation frequency that is controlled in accordance with the operation state of the air conditioner so as to achieve most appropriate air conditioning performance.

Unlike the case where a heater or the like is used as the heat source, the compressor 6, which is used as the heat source, may possibly have a calorific value or a temperature value that are not kept most appropriately for storing heat.

Under a condition with a high air conditioning load requiring high heating performance, the compressor 6 keeps operating at a high frequency and is accordingly kept at high temperature.

In this manner, the heat storage material 36 may be possibly left in such a hot environment for a long period of time. If waste heat of the compressor 6 is collected in the heat storage material 36, the joint portion is particularly desirably made not to be immersed in the heat storage material 36.

As shown in Figs. 4 and 6, the heat storage tank 32 is extended to be higher than the compressor 6 and the heat storage heat exchanger 34 is provided also in the extended portion. In this case, it is possible to secure heat capacity.

According to the present invention, glycol is included in the heat storage material 36.

### INDUSTRIAL APPLICABILITY

In the heat storage device of the air conditioner according to the present invention, the joint portion of the heat storage heat exchanger is appropriately positioned in consideration of improvement in reliability. The heat storage device of the air conditioner according to the present invention is also useful in a refrigerator, a water heater, a heat pump washing machine, or the like.

### DESCRIPTION OF REFERENCE SIGNS

2 outdoor unit, 4 indoor unit, 6 compressor, 8 four-way valve, 10 strainer, 12 expansion valve, 14 outdoor heat exchanger, 16 indoor heat exchanger, 18 first pipe, 20 second pipe, 22 third pipe, 24 fourth pipe, 26 accumulator, 28 fifth pipe, 30 first solenoid valve, 32 heat storage tank, 33 band, 34 heat storage heat exchanger, 34a bent portion, 34b straight portion, 36 heat storage material, 38 sixth pipe, 40 seventh pipe, 42 second solenoid valve, 44 temperature sensor, 46 heat storage tank body, 46a side wall, 46b opening in side wall, 48 lid, 50 packing member, 52 contact member, 54 frame, 54a opening, 56 sheet member

## Claims

1. An air conditioner comprising a heat storage device for storing heat generated by a compressor (6), the heat storage device comprising:
a heat storage material (36) storing heat generated by the compressor (6);
a heat storage heat exchanger (34); and
a heat storage tank (32) accommodating the heat storage material (36) and the heat storage heat exchanger (34); wherein the heat storage material (36) includes glycol;
**characterized in that**
a vertical position of a center of gravity (CoB) of the heat storage heat exchanger (34) is higher than a vertical center (H2) of the heat storage tank (32),
a lower end (H3) of the heat storage heat exchanger (34) is lower than the vertical center (H2) of the heat storage tank (32),
the lower end (H3) of the heat storage heat exchanger (34) is positioned in a vicinity of the vertical center (H2) of the heat storage tank (32),
the heat storage heat exchanger (34) has a joint portion (34j) wherein the joint portion is located outside the heat storage tank (32), and
the heat storage tank (32), the heat storage heat exchanger (34) and the heat storage heat material (36) are disposed to surround the compressor (6).

2. The air conditioner according to claim 1, wherein the joint portion (34j) is connected by brazing or welding.

## Patentansprüche

1. Klimaanlage, die eine Wärmespeichereinrichtung zum Speichern von durch einen Kompressor (6) erzeugter Wärme umfasst, wobei die Wärmespeichereinrichtung umfasst:
ein Wärmespeichermaterial (36), das von dem Kompressor (6) erzeugte Wärme speichert;
einen Wärmespeicher-Wärmetauscher (34); und
einen Wärmespeicherbehälter (32), der das Wärmespeichermaterial (36) und den Wärmespeicher-Wärmetauscher (34) aufnimmt;
wobei das Wärmespeichermaterial (36) Glykol enthält;
**dadurch gekennzeichnet, dass**
eine vertikale Position eines Schwerpunkts (CoB) des Wärmespeicher-Wärmetauschers (34) höher angeordnet ist als eine vertikale Mitte (H2) des Wärmespeicherbehälters (32),
ein unteres Ende (H3) des Wärmespeicher-Wärmetauschers (34) niedriger angeordnet ist als die vertikale Mitte (H2) des Wärmespeicherbehälters (32),
das untere Ende (H3) des Wärmespeicher-Wärmetauschers (34) in der Nähe der vertikalen Mitte (H2) des Wärmespeicherbehälters (32) angeordnet ist,
der Wärmespeicher-Wärmetauscher (34) einen Verbindungsabschnitt (34j) aufweist, wobei der Verbindungsabschnitt außerhalb des Wärmespeicherbehälters (32) angeordnet ist, und
der Wärmespeicherbehälter (32), der Wärmespeicher-Wärmetauscher (34) und das Wärmespeicher-Wärmematerial (36) so angeordnet sind, dass sie den Kompressor (6) umgeben.

2. Klimaanlage nach Anspruch 1, wobei der Verbindungsabschnitt (34j) durch Löten oder Schweißen verbunden ist.

## Revendications

1. Climatiseur comprenant un dispositif de stockage de chaleur pour stocker la chaleur générée par un compresseur (6), le dispositif de stockage de chaleur comprenant:
un matériau de stockage de chaleur (36) stockant la chaleur générée par le compresseur (6) ;
un échangeur de chaleur de stockage de chaleur (34) ; et
un réservoir de stockage de chaleur (32) recevant le matériau de stockage de chaleur (36) et l'échangeur de chaleur de stockage de chaleur (34) ;
le matériau de stockage de chaleur (36) comprenant du glycol ;
**caractérisé en ce que**
une position verticale d'un centre de gravité (CoB) de l'échangeur de chaleur de stockage de chaleur (34) est plus haute qu'un centre vertical (H2) du réservoir de stockage de chaleur (32),
une extrémité inférieure (H3) de l'échangeur de chaleur de stockage de chaleur (34) est plus basse que le centre vertical (H2) du réservoir de stockage de chaleur (32),
l'extrémité inférieure (H3) de l'échangeur de chaleur de stockage de chaleur (34) est positionnée à proximité du centre vertical (H2) du réservoir de stockage de chaleur (32),
l'échangeur de chaleur de stockage de chaleur (34) présente une partie de raccord (34j), la partie de raccord étant située à l'extérieur du réservoir de stockage de chaleur (32) et
le réservoir de stockage de chaleur (32), l'échangeur de chaleur de stockage de chaleur (34) et le matériau de chaleur de stockage de chaleur (36) étant disposés de manière à entourer le compresseur (6).

2. Climatiseur selon la revendication 1, dans lequel la partie de raccord (34j) est reliée par brasage ou soudage.
